# EUROPEAN PATENT APPLICATION

(11) **EP 3 677 895 A1**
(43) Date of publication of application: **08.07.2020**
(21) Application number: 19218248.3
(22) Date of filing: 19.12.2019
(51) Int. Cl.: G01N 1/22, G01N 15/14

(54) **SYSTEM CAPABLE OF MEASURING PARTICULATES**

(30) Priority: 03.01.2019 KR 20190000883
(71) Applicant: SICK AG, 79183 Waldkirch (DE)
(72) Inventor: Klinder, Kai, 01458 Ottendorf-Okrilla (DE); Schladitz, Dr. Alexander, 01127 Dresden (DE); Chung, J. K., 06258 Gangnam-Gu, Seoul (KR)

(57) **Abstract**

The present invention relates to a system capable of measuring particulates which is technically characterized by including: a nozzle formed in the shape of a tube; a light measurement unit which is constituted by a light source supplied as energy and a photodetector and is provided adjacent to the nozzle; a probe which has a hollow shape and into which one end of the nozzle is inserted; a particle measurement unit provided adjacent to the light measurement unit to measure the particulates introduced through the nozzle; an evaluation model unit linked to the particle measurement unit to evaluate the volume of the particulates on the basis of software; an evaluation process unit linked to the evaluation model unit to evaluate each of a volume size distribution of the particulates, an integration with respect to the size of each of the particulates and a time, and the volume concentration of the particulates; a purge supply unit linked with an outer end of the probe to supply a purge into the probe; and a velocity control unit provided adjacent to the probe to control the velocity of the purge supplied to the probe, thereby enabling the improvement of the reliability of particulate monitoring because it is possible to continuously monitor characteristics of the particulates such as concentration, size distribution, particle grade, and the like of the particulates extracted from an atmospheric gas or an exhaust gas.

## Description

The present invention relates to a system capable of measuring particulates, and more particularly, to a system capable of measuring particulates, which can improve the reliability of particulate monitoring because it is possible to continuously monitor characteristics of the particulates such as concentration, size distribution, particle grade, and the like of the particulates extracted from an atmospheric gas or an exhaust gas.

In general, in marine combustion facilities or onshore plants that handle petrochemical related products, various kinds of harmful substances which pass through each process and are harmful to the human body are generated in a combustion process and discharged in the form of an exhaust gas.

The harmful substances include sulfur oxides, nitrogen oxides, carbon monoxide, sulphurous acid gas, hydrogen chloride, and ammonia. Since these harmful substances are not only harmful to the human body but also have a great impact on the environment, the emission of exhaust gases is subject to legal and administrative regulations around the world.

Therefore, an analyzer for extracting a portion of the exhaust gas discharged through an exhaust duct to constantly analyze various components of the exhaust gas is provided in places, in which a large amount of exhaust gas is generated, such as marine combustion facilities, onshore plants, and the like, and appropriate measures are taken according to the analysis results.

As methods of analyzing and measuring the components of the exhaust gas discharged through the exhaust duct, there are a sampling measurement method of extracting samples of some of the exhaust gas discharged from the exhaust duct to deliver the samples to a measurement instrument installed at a specific place through a sampling line and measuring the components and an in-situ measurement method of directly inserting a probe into the exhaust duct to measure and analyze the components of the exhaust gas in real-time in the field.

In recent years, there is a trend favouring the in-situ measurement method, since the conformity of the exhaust gas is most accurately measured directly from the exhaust duct.

However, some of the exhaust gas introduced into the probe may be mixed with other foreign substances such as moisture or ash, which are factors that hinder the accuracy of the gas analysis.

In addition, there is a problem in that, inconveniently, in order to remove the foreign substances such as the moisture or ash, which remain in the probe, a separate purge device needs to be provided and this complicates the configuration of the device and increases the installation costs.

The related prior arts include Registered Patent No. 10-1793550 (Title of the Invention: Exhaust Gas Component Analysis System And Exhaust Gas Component Analysis Method, Date of Registration: October 30, 2017) and Patent Publication No. 10-2017-0088929 (Title of the Invention: Exhaust Gas Sampling System and Operation Method of this type of Exhaust Gas Sampling System, Date of Publication: August 02, 2017).

The present invention was made to solve the problems of the related art as described above, and an object of the present invention is to provide a system capable of measuring particulates, which can improve the reliability of particulate monitoring because it is possible to continuously monitor characteristics of the particulates such as concentration, size distribution, grade, and the like of the particulates extracted from an atmospheric gas or an exhaust gas.

Other objects of the present invention may be understood through the features of the present invention, more clearly understood through the embodiments of the present invention, and may be realized by the means and combinations indicated in the claims.

The present invention has the following technical features to resolve the problem to be solved by the present invention as described above.

A system capable of measuring particulates according to the present invention includes: a nozzle formed in the shape of a tube; a light measurement unit which is constituted by a light source supplied as energy and a photodetector and is provided adjacent to the nozzle; a probe which has a hollow shape and into which one end of the nozzle is inserted; a particle measurement unit provided adjacent to the light measurement unit to measure the particulates introduced through the nozzle; an evaluation model unit linked to the particle measurement unit to evaluate the volume of the particulates on the basis of software; an evaluation process unit linked to the evaluation model unit to evaluate each of a volume size distribution of the particulates, an integration with respect to the size of each of the particulates and a time, and the volume concentration of the particulates; a purge supply unit linked with an outer end of the probe to supply a purge into the probe; and a velocity control unit provided adjacent to the probe to control the velocity of the purge supplied into the probe.

In the system capable of measuring particulates according to the present invention, the probe is constituted by a purge tube and a sampling tube therein, the purge tube is provided within the probe, and the sampling tube is provided within the purge tube.

In the system capable of measuring particulates according to the present invention, a velocity sensor is provided in the sampling tube to determine the flow rate of the sampling tube and transmit the determined flow rate signal to the velocity control unit.

In the system capable of measuring particulates according to the present invention, a velocity sensor head is provided around an outer circumferential surface of the sampling tube, provided on the sampling tube exposed to the outside of the probe, and linked with the velocity control unit.

In the system capable of measuring particulates according to the present invention, the purge supplied into the probe is generated by means of a compressor or a blower provided adjacent to the purge supply unit.

In the system capable of measuring particulates according to the present invention, a bypass valve is linked to the compressor, and the bypass valves controls the flow of the purge supplied into the probe.

In the system capable of measuring particulates according to the present invention, a chimney measurement flow meter is provided adjacent to an inlet of the probe to measure the flow rate, thereby providing information on the measured flow rate to the velocity control unit.

In the system capable of measuring particulates according to the present invention, a mass flow sensor is provided on the sampling tube exposed to the outside of the probe and is linked to the velocity control unit to transmit a channel and a temperature.

In the system capable of measuring particulates according to the present invention, a measurement volume is formed between the light source and the photodetector so the light source and the photodetector generate an air cushion which blocks contamination by the particulates.

The present invention may improve the reliability of the particulate monitoring through the means of solving the problem as described above because it is possible to continuously monitor the characteristics of the particulates such as the concentration, the size distribution, the particle grade, and the like of the particulates extracted from the atmospheric gas or the exhaust gas.

Other effects of the present invention may be understood through the features of the present invention, more clearly understood through the embodiments of the present invention, and may be exhibited by the means and combinations indicated in the claims.
FIG. 1 is a drawing of an embodiment of a system capable of measuring particulates according to the present invention,
FIG. 2 is a drawing of an embodiment of a method for measuring a channel velocity and a method for controlling a purge gas according to FIG. 1,
FIG. 3 is a drawing of another embodiment of the method for controlling a purge gas according to FIG. 1,
FIG. 4 is a drawing of another further embodiment of the method for controlling the purge gas according to FIG. 1,
FIG. 5 is a drawing of another embodiment of a method for measuring a channel velocity according to FIG. 1,
FIG. 6 is a drawing of another further embodiment of the method for measuring the channel velocity according to FIG. 1, and
FIG. 7 is a drawing of yet another embodiment of the method for measuring the channel velocity according to FIG. 1.

The following detailed description of the present invention, which will be described below, refers to the accompanying drawings that illustrate specific embodiments in which the present invention can be implemented, as examples. These embodiments are described in sufficient detail to enable those skilled in the art to implement the present invention. It should be understood that the various embodiments of the present invention are different but need not be mutually exclusive. For example, specific shapes, structures, and characteristics described herein may be implemented in other embodiments without departing from the technical spirit and scope of the present invention with respect to an embodiment. In addition, it is to be understood that the location or arrangement of individual components in each disclosed embodiment may be changed without departing from the technical spirit and scope of the present invention. The following detailed description is, therefore, not to be taken in a limiting sense, and the scope of the present invention is defined only by the appended claims, along with the full scope of equivalents to that which the claims claim. Like reference numerals in the drawings refer to the same or similar functions throughout the several aspects.

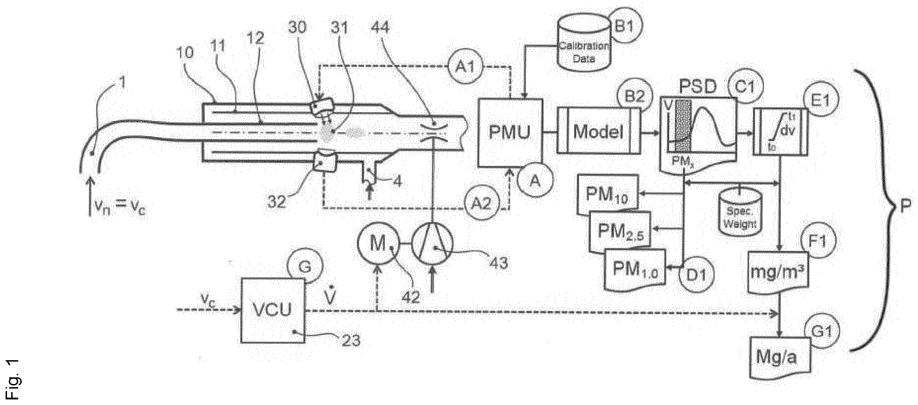

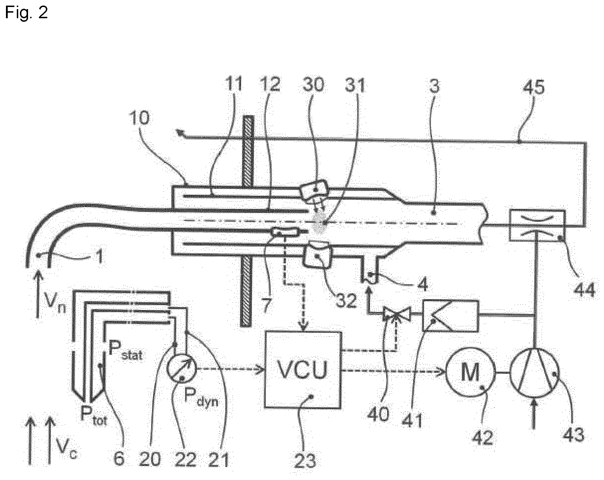

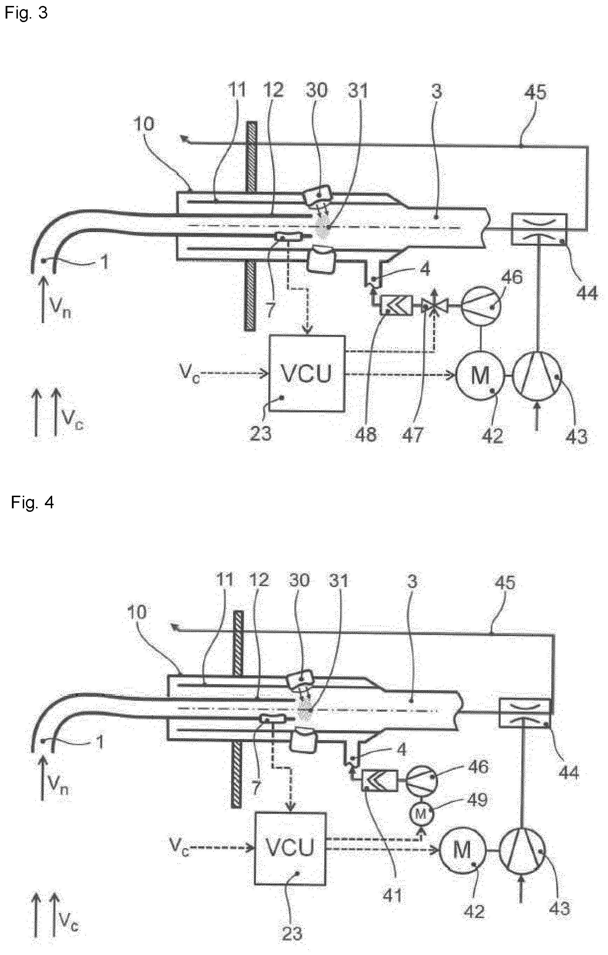

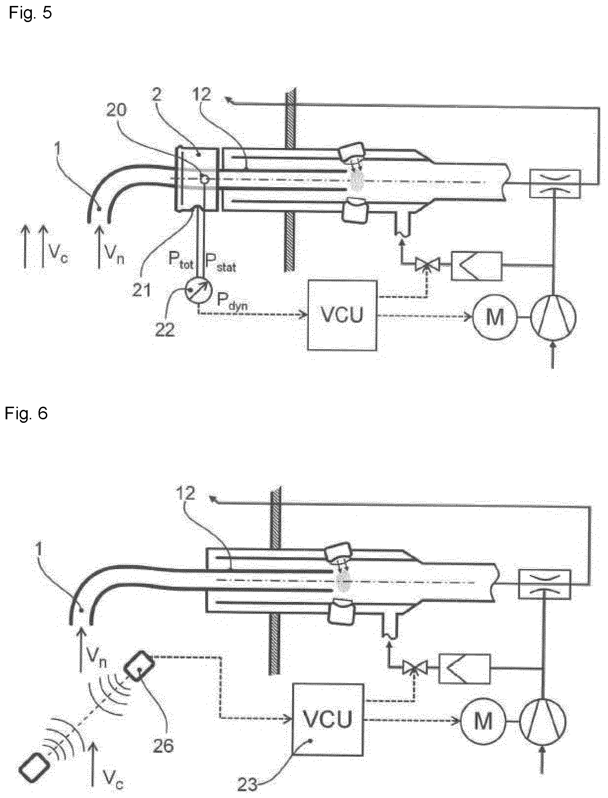

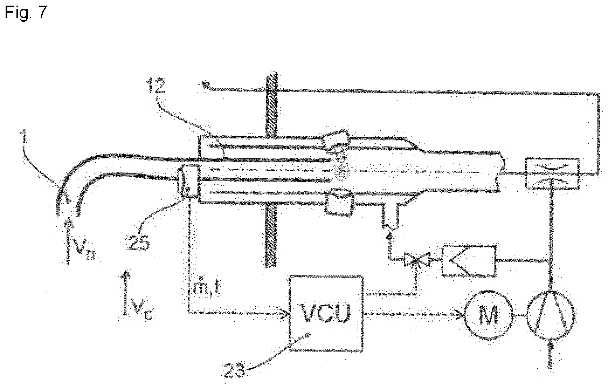

FIG. 1 is a drawing of an embodiment of a system capable of measuring particulates according to the present invention, FIG. 2 is a drawing of an embodiment of a method for measuring a channel velocity and a method for controlling a purge gas according to FIG. 1, FIG. 3 is a drawing of another embodiment of the method for controlling a purge gas according to FIG. 1, FIG. 4 is a drawing of another further embodiment of the method for controlling the purge gas according to FIG. 1, FIG. 5 is a drawing of another embodiment of a method for measuring a channel velocity according to FIG. 1, FIG. 6 is a drawing of another further embodiment of the method for measuring the channel velocity according to FIG. 1, and FIG. 7 is a drawing of yet another embodiment of the method for measuring the channel velocity according to FIG. 1.

A system capable of measuring particulates according to the present invention includes, as illustrated in FIGS. 1 to 7, a nozzle (1), a light measurement unit (3), a probe (10), a particle measurement unit (PMU), an evaluation model unit (B2), an evaluation process unit (P), a purge supply unit (4), and a velocity control unit (23, VCU).

The smaller the particle size of particulates in ambient air, the greater the biological impact on human health. Thus, a classification operation for a particle size 1, which is generally given as a PM class of PM 10, PM 2.5, or PM 1.0, is used to characterize, evaluate, or avoid any adverse health effects.

An object of the present invention is to provide a complete monitoring system that continuously monitors the particulate concentration and/or particulate size distribution in gas particle aerosol within an exhaust gas stream, a machine, a building, or the atmosphere. An important object of the present invention is to provide reliable measurement data of the PM class.

Referring to FIG. 1, the present invention provides a number of particulate characteristics such as mass concentration, a particle size distribution curve, or PM grade.

The present invention is constituted by following main elements.
- A nozzle (1) provided with an optical measurement system constituted by several light emitters supplied as energy, a probe (10) outside a tube, a probe purge tube (11), and a scattered light receiver that is called a probe sampling tube (12) and receives and transmits a scattered light image.
- An electronic particle measurement device PMU (#A) provided with an input/output interface with an evaluation processor and a data buffer
- A software-based evaluation model (# B2),
- Evaluation processes C1, D1, E1, F1, and G1,
- A velocity control unit VCU (#G),
- A velocity sensor for measuring a constant velocity,
- A suction pump on which an electric motor (42) is mounted
- An ejector (44) embedded in the probe (10) and driven by a suction pump or vacuum pump is preferred.
Purge is supplied into the probe (10) through a purge supply unit (4).

The ejector (44) generates a negative pressure in relation to a channel pressure so that gas and particulate aerosol are suctioned into the probe and guided through a measurement volume between the light emitter and the light receiver.

In a purge gas flow entering the probe (10) from the purge supply unit (4), light receiver particulates that generate an air cushion around the measurement volume (31) produce backscatter reflection in order to prevent a light source (30) and a photodetector (32) from being contaminated by the particulates between the probe purge tube (11) and the probe sampling tube (12) and are converted into a multi-signal image (A2) and in proportion to the particle size and particle presence.

In the particle measurement unit (PMU), the particle measurement unit (PMU) includes an electric control device for the light emitter and the light receiver. A main task of the particle measurement unit (PMU) is software-based evaluation of multi-signal images (A2), and the evaluation model unit (mathematical model, B2) and initially generated calibration data are used to analyze the particulate volume.

The evaluation process unit (P) consists of several steps as follows.

An evaluation process step (C1) uses a permanent measurement value of each individual particulate volume and maintains the measurement value for a predetermined time period (e.g., 5 minutes) to calculate a particle volume size distribution, i.e., a particle volume concentrate (vertical coordinate) relative to the particulate size (horizontal coordinate). A typical fine dust size ranges, for example, from 0.1 µm to 20 µm|m, and a smaller or larger size is possible.

In an evaluation process step (D1), one or several size classes corresponding to a desired PM class, generally PM 10, PM", or PM 1 are separated from the overall particle volume size distribution.

In the evaluation process step (D1), the integrated PM-class related particulate volume is multiplied by a particle density determined during the installation process. As a result, a PM mass concentration given in pg/m3 is generally given.

An evaluation process step (E1), the total particulate volume size distribution (C1) has a predetermined time period, for example, 5 minutes.

In an evaluation process step (F1), the total particulate volume of the step E1 is multiplied by the particle density to obtain the total mass concentration of the particulates in the time period. Generally, it is mg/m3.

The velocity control unit (23, VCU) supplies information about an average gas volume flow rate in the duct during the time period determined in step (G). 5 minutes. In an evaluation process step (G1), the total mass concentration is multiplied by the gas volume flow rate to generate a mass flow of the discharged particulates. More integration leads to a larger output for a longer period of time. Monthly or once within the last year, usually, it is expressed in Mg/a.

It is also important to correctly extract the particle gas aerosol through the nozzle (1) in addition to the optical measurement. The greater the mass of the individual particulate, the more the particulates accumulate at a bend downstream of the suction pipe. It is also preferable that the velocity of Vn is maintained to be the same as the velocity of Vc so as to avoid a sampling lose.

This principle is known as isokinetic sampling. If Vn is extremely different from Vc, a specific particle content may be affected by a velocity difference.

The smaller and lighter particulates are associated with a dynamic and efficient surface, and less isokinetic extraction is not important. That is, the smaller the particle molecules are like gas molecules, the smaller the particle, and also, the particles precisely flow along a gas flow 1, and thus, particle separation does not occur any more. In the case of the present invention, adsorption among others is preferably used at a high particulate concentration and/or for heavy particulates.

The present invention proposes various methods for measuring the velocity Vc, secondly controlling a velocity at the nozzle Vn, and thirdly measuring and controlling a velocity and a gas flow rate at the measurement volume (31).

Referring to FIG. 2 shown, a separate pitot-type or ultrasonic-type for measuring the velocity in a channel Vc is used as a channel velocity measurement method 1 and a purge gas control method. The velocity control unit (23, VCU) calculates the power required to control a rotational velocity of the electric motor (42) that drives the compressor (46) or the blower (43). A compression gas used to drive the ejector (44) is produced to generate a partial vacuum in which the aerosol is extracted from the channel through the probe (10) and a measurement cell.

An internal mass flow sensor (25), which may be a differential pressure sensor, determines the flow rate of the sampling tube (12). A flow signal is transmitted to the velocity control unit (23, VCU) and is used to close a control loop so that the velocity of Vn and the velocity of the channel Vc are adjusted to be the same through the motor (42) in the velocity control unit (23, VCU).

The velocity control unit (23, VCU)s additionally controls the purge gas flow using the purge gas valve (40) so that the velocity of the purge gas in front of the measurement volume (31) is the same as the velocity of the probe sampling tube (12).

Referring to FIG. 3, the purge gas is generated by means of one blower (43) or compressor (46) or by means of a plurality of blowers (43) and compressors (46).

Another deformation control of the purge gas controls the purge gas flow by means of the bypass valve (47).

Referring to FIG. 4, the additional deformation of the purge gas control is that the velocity control unit (23, VCU) directly controls the purge gas flow through direct velocity control of the second blower/compressor (46).

Referring to FIG. 5, the present invention proposes integration of the velocity sensor head (2) to an upper portion of the extraction probe. The velocity sensor head (2) surrounds the probe sampling tube (12) and includes a rotating structure including at least one opening that is perpendicular to a channel flow direction, which is used as the static pressure inlet (20), at least one opening part in the flow direction, and a used total pressure suction hole (21). The differential pressure passes through the differential pressure manometer (22) and is supplied to the velocity control unit (23, VCU), and the velocity control unit (23, VCU) is used for velocity and duct flow value, isokinetic control, and mass flow calculations.

Referring to FIG. 6, the present invention proposes integration of the chimney measurement flow meter (26) to the system. The chimney measurement flow meter (26) is constituted by at least two sensor heads and measures the flow rate to provide the measured flow rate information to the velocity control unit (23, VCU).

The chimney measurement flow meter (26) calculates a velocity and a duct flow rate value from a bidirectional pulse time delay that is changed by means of the gas flow and is used in the isokinetic control and the mass flow calculation in the velocity control unit (23).

Although the present invention exemplifies the integration of the chimney measurement flow meter (26) to the system, it is possible to select the pitot-type or an ultrasonic-type depending on the circumstances.

Referring to FIG. 7, in the present invention, the mass flow sensor (25) is provided as the extraction probe, and the mass flow sensor (25) is widely used to monitor air flow.

Combustion engine. In this application, the mass flow sensor (25) transmits a channel and temperature to the velocity control unit (23, VCU), and the velocity control unit (23, VCU) calculates the velocity and duct flow.

In the above, the present invention has been described based on the preferred embodiments, but the technical spirit of the present invention is not limited thereto, and modifications or changes can be made within the scope of the claims which is apparent to those skilled in the art to which the present invention belongs, and such modifications and variations are intended to belong to the appended claims.

### Description of reference numerals

1 : Nozzle
2 : Velocity sensor head
20 : Static pressure inlet
21 : Total pressure suction hole
22 : Differential pressure manometer
23 : Velocity control unit
25 : Mass flow sensor
26 : Chimney measurement flow meter
3 : Light measurement unit
30 : Light source
31 : Measurement volume
32 : Photodetector
4 : Purge supply unit
40 : Purge gas valve
42 : Motor
43 : Blower
44 : Ejector
46 : Compressor
47 : Bypass valve
7 : Velocity sensor
10 : Probe
11 : Purge tube
12 : Sampling tube
B2 : Evaluation model unit
PMU : Particle measurement unit
P : Evaluation process unit
Vc : Channel
Vn : Nozzle

## Claims

1. A system capable of measuring particulates, **characterized by** comprising:
a nozzle formed in the shape of a tube;
a light measurement unit which is constituted by a light source supplied as energy and a photodetector and is provided adjacent to the nozzle;
a probe which has a hollow shape and into which one end of the nozzle is inserted;
a particle measurement unit provided adjacent to the light measurement unit to measure the particulates introduced through the nozzle;
an evaluation model unit linked to the particle measurement unit to evaluate the volume of the particulates on the basis of software;
an evaluation process unit linked to the evaluation model unit to evaluate each of a volume size distribution of the particulates, an integration with respect to the size of each of the particulates and a time, and the volume concentration of the particulates;
a purge supply unit linked with an outer end of the probe to supply a purge into the probe; and
a velocity control unit provided adjacent to the probe to control the velocity of the purge supplied into the probe.

2. The system capable of measuring particulates of claim 1, **characterized in that** the probe is constituted by a purge tube and a sampling tube therein, the purge tube is provided within the probe, and the sampling tube is provided within the purge tube.

3. The system capable of measuring particulates of claim 2, **characterized in that** a velocity sensor is provided in the sampling tube to determine the flow rate of the sampling tube and transmit the determined flow rate signal to the velocity control unit.

4. The system capable of measuring particulates of claim 1, **characterized in that** a velocity sensor head is provided around an outer circumferential surface of the sampling tube, provided on the sampling tube exposed to the outside of the probe, and linked with the velocity control unit.

5. The system capable of measuring particulates of claim 1, **characterized in that** the purge supplied into the probe is generated by a compressor a blower provided adjacent to the purge supply unit.

6. The system capable of measuring particulates of claim 5, **characterized in that** a bypass valve is linked to the compressor, and the bypass valve controls the flow of the purge supplied into the probe.

7. The system capable of measuring particulates of claim 1, **characterized in that** a chimney measurement flow meter is provided adjacent to an inlet of the probe to measure a flow rate, thereby providing information on the measured flow rate to the velocity control unit.

8. The system capable of measuring particulates of claim 1, **characterized in that** a mass flow sensor is provided on the sampling tube exposed to the outside of the probe and linked to the velocity control unit to transmit a channel and a temperature.

9. The system capable of measuring particulates of claim 1, **characterized in that** a measurement volume is formed between the light source and the photodetector so the light source and the photodetector generate an air cushion which blocks contamination of the particulates.
